# EUROPEAN PATENT APPLICATION

(11) **EP 4 570 888 A1**
(43) Date of publication of application: **18.06.2025**
(21) Application number: 23852518.2
(22) Date of filing: 07.08.2023
(51) Int. Cl.: C10M 169/00, F16C 19/06, F16C 33/66, C10M 105/36, C10M 115/08, C10M 129/58, C10M 129/72, C10M 129/74, C10M 133/12, C10M 137/10, C10N 10/04, C10N 30/00, C10N 30/10, C10N 30/12, C10N 40/02

(54) **GREASE COMPOSITION AND ROLLING DEVICE**

(30) Priority: 09.08.2022 JP 2022127131
(71) Applicant: NSK LTD., Tokyo 141-8560 (JP); ENEOS Corporation, Chiyoda-ku Tokyo 100-8162 (JP)
(72) Inventor: TODA Yujiro, Fujisawa-shi, Kanagawa 251-8501 (JP); KAWANO Tomoki, Fujisawa-shi, Kanagawa 251-8501 (JP); IZUMI Toru, Tokyo 100-8162 (JP); AYAME Yusuke, Tokyo 100-8162 (JP)
(74) Representative: Müller-Boré & Partner Patentanwälte PartG mbB
(86) International application number: PCT/JP2023/028703
(87) International publication number: WO 2024/034556

(57) **Abstract**

A grease composition includes: (A) a trimellitic acid ester, (B1) a phenyl **α** naphthylamine, (B2) an alkyl diphenylamine, (C1) a succinic acid half ester, (C2) a sorbitan monoester, and (D) a urea-based thickener. This grease composition is excellent in anti-flaking, rust prevention, and oxidation resistance properties, and furthermore, a fatigue life of a rolling device and the like in which the grease is enclosed can be maintained for a long time.

## Description

### Technical Field

The present invention relates to a grease composition. The present invention also relates to a bearing and a rolling device in which the grease composition is enclosed.

### Background Art

In an automobile, the demand for more living space and further downsizing and weight reduction of the automobile itself has forced reduction in the size of an engine compartment. The downsizing and weight reduction of electrical components/auxiliaries such as alternators, electromagnetic clutches for automotive air conditioning systems, intermediate pulleys, and electric fan motors, has also been further promoted. The environments in which they are used are also diverse, for example, in tropical rainforest areas and areas near oceans, high humidity and salinity of the atmosphere place high demands on rust prevention. In addition, the electrical components/auxiliaries themselves are required to have higher output power. Furthermore, the engine compartment is becoming more enclosed due to the demand for improved quietness, which further promotes higher temperatures in the engine compartment. Therefore, parts with specifications that can withstand higher temperatures are needed.

Rolling bearings are used in these electrical components/auxiliaries, and grease is mainly used to lubricate the rolling bearings. In order to meet the requirements of electrical components/auxiliaries (smaller size and weight/higher output power/rust prevention/high temperature resistance), bearings are required to have high speed rotating capability, high load capacity, rust prevention, and high temperature resistance. In general, to improve the rust prevention of bearings, it is effective to blend a rust inhibitor in the grease. To improve the high temperature resistance of bearings, it is effective to blend an antioxidant to the grease to inhibit oxidative deterioration of the grease.

It has been reported that when operating conditions of the rolling bearings are increased to the high rotating speed and high load, on the other hand, flaking with white type microstructural changes occurs on rolling surfaces of the rolling bearings used, leading to premature life.

There are many cases that the above electrical components/auxiliaries are driven by pulleys that are power transmitted by belts from a power source. It is estimated that damage to rolling bearings occurs at an earlier stage due to occurrence of electrostatic charging of the rolling bearings that support rotation of the pulleys caused by the influences of static electricity and the like generated by friction between the belts and the pulleys in such cases.

In order to prevent the defects described above, and at the same time, meet the requirements of rust prevention and high temperature resistance of bearings, greases in which a base oil and additives such as antioxidants and rust inhibitors are blended, have been considered. Grease compositions including various additives have also been developed, such as those described in Patent Literature 1, which a trimellitic acid ester is used as the base oil for the purpose of inhibiting the flaking.

### Citation List

### Patent Literature

Patent Literature 1: Japanese Patent Laid-Open No. 2005-298537

### Summary of Invention

### Technical Problem

However, it is feared that with further high rotating speed and high load, the flaking occurred on the rolling surfaces of the rolling bearings will become more pronounced. Furthermore, certain properties of the grease composition could be reduced by the addition of certain additives. Specifically, in some cases, the addition of antioxidants and rust inhibitors could reduce an anti-flaking property of the grease compositions. Therefore, it has been very difficult to develop a grease composition that further inhibits flaking while also having rust prevention and oxidation resistance.

### Solution to Problem

The present inventors have intensively studied grease compositions having anti-flaking, rust prevention, and oxidation resistance performances. And the present inventors have found that grease compositions having anti-flaking, rust prevention, and oxidation resistance performances can be obtained by combining a trimellitic acid ester with specific additives, leading to the completion of the present invention.

The present invention is based on such findings and as follows.
<1> A grease composition including:
   (A) a trimellitic acid ester,
   (B1) a phenyl **α** naphthylamine,
   (B2) an alkyl diphenylamine,
   (C1) a succinic acid half ester,
   (C2) a sorbitan monoester, and
   (D) a urea-based thickener.
<2> The grease composition according to <1>, wherein the grease composition includes no or less than 2 mass% of (C3) zinc naphthenate.
<3> The grease composition according to <1> or <2>, wherein the grease composition includes no or less than 2 mass% of (B3) a zinc dialkyl dithiophosphate.
<4> The grease composition according to any of <1> to <3>, wherein the grease composition includes:
   50 mass% to 95 mass% of (A) the trimellitic acid ester based on the total amount of the grease composition,
   0.1 mass% to 10 mass% of (B1) the phenyl **α** naphthylamine based on the total amount of the grease composition,
   0.1 mass% to 10 mass% of (B2) the alkyl diphenylamine based on the total amount of the grease composition,
   0.1 mass% to 10 mass% of (C1) the succinic acid half ester based on the total amount of the grease composition,
   0.1 mass% to 10 mass% of (C2) the sorbitan monoester based on the total amount of the grease composition, and
   5 mass% to 30 mass% of (D) the urea-based thickener based on the total amount of the grease composition.
<5> A bearing and a rolling device, wherein the grease according to any of <1> to <4> is enclosed therein as lubricant.

### Advantageous Effect of Invention

A grease composition of the present invention is excellent in anti-flaking, rust prevention, and oxidation resistance properties, and furthermore, a fatigue life of a rolling device and the like in which the grease is enclosed can be maintained for a long time. Therefore, the grease composition of the present invention can withstand long-term use.

### Brief Description of Drawing

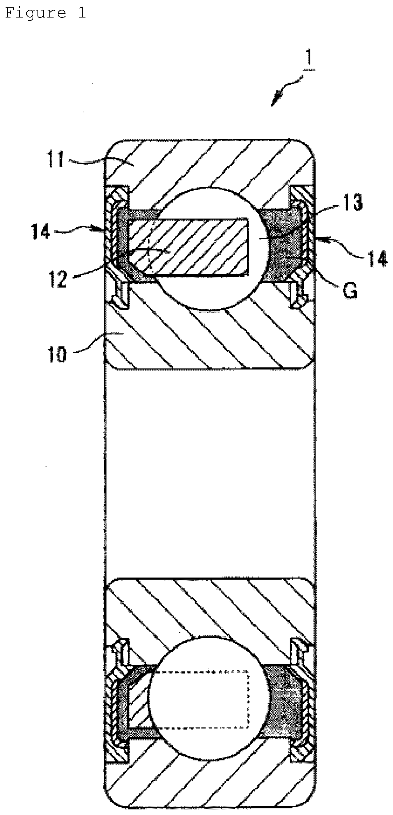

[Figure 1] Figure 1 is a cross-sectional view showing a rolling device with respect to one embodiment of the present invention.

### Description of Embodiment

### {Trimellitic acid ester}

In a grease composition of the present invention, a trimellitic acid ester is used as a base oil for lubricant. It is preferable from the viewpoint of an anti-flaking property that the trimellitic acid ester represented by the following general formula (I) be used.

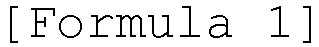

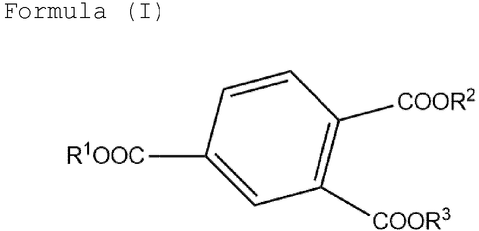

In formula (I), R¹, R², and R³ are hydrogen atoms or hydrocarbon groups having 5 to 20 carbon atoms, and R¹, R², and R³ may be the same or different each other. However, R¹, R², and R³ cannot all be hydrogen atom at the same time. In addition, these hydrocarbon groups represent saturated or unsaturated, straight-chain or branched alkyl groups.

Such a trimellitic acid ester is available in the market, such as "TRIMEX T-08" and "TRIMEX N-08" produced by Kao Corporation and "ADEKA PROVER T-90" produced by

### ADEKA CORPORATION.

It is preferable that the trimellitic acid ester in the present invention include those in which at least one of the above R¹, R², and R³ is hydrogen. By using such a trimellitic acid ester, a higher anti-flaking property can be obtained.

From a similar perspective, it is preferable that the trimellitic acid ester in the present invention have an overall acid number of 2 to 10 mgKOH/g. Herein, an acid number of the trimellitic acid ester means the acid number measured in accordance with JIS K2501:2003.

When the R¹, R², and R³ are hydrocarbon groups, it is preferably one having 7 to 15 carbon atoms, more preferably one having 8 to 11 carbon atoms, and even more preferably one having 9 to 11 carbon atoms, as the trimellitic acid ester in the present invention. This is because it provides evaporation resistance, and a stable oil film when enclosed in a bearing as a grease, while reducing stirring heat when enclosed in the bearing as the grease.

As the base oil for lubricant, the trimellitic acid ester can be used by mixing with other base oils for lubricant as appropriate. As the other base oils for lubricant, a mineral oil, an alkyl naphthalene, a fluorinated oil, a silicone oil, a glycol oil, a synthetic hydrocarbon oil, an ether oil, an ester oil other than the trimellitic acid ester, etc. can be used. Specifically, a poly-α-olefin oil or the like as the synthetic hydrocarbon oil, an alkyl diphenyl ether oil, an alkyl triphenyl ether oil, etc. as the ether oil, and a diester oil, a neopentyl type polyol ester oil, these complex ester oils, etc. as the ester oil, can be used. These base oils for lubricant combined with the trimellitic acid ester may be used alone or in combination as appropriate.

In the grease composition of the present invention, it is preferable that only the trimellitic acid ester be included as the base oil for lubricant and that no other base oil for lubricant be included. Specifically, in the grease composition of the present invention, a content of the trimellitic acid ester can be, for example, 50 mass% or more, 60 mass% or more, 70 mass% or more, 80 mass% or more, 90 mass% or more, 95 mass% or more, or 99 mass% or more, based on the amount of the base oil for lubricant.

Kinematic viscosity of the base oil for lubricant at 40°C is preferably 30 mm²/s or more, more preferably 40 mm²/s or more, and even more preferably 45 mm²/s or more. In addition, the kinematic viscosity of the base oil for lubricant at 40°C is preferably 150 mm²/s or less, more preferably 130 mm²/s or less, and even more preferably 100 mm²/s or less. A specific range is preferably 30 mm²/s to 150 mm²/s, more preferably 40 mm²/s to 130 mm²/s, and even more preferably 45 mm²/s to 100 mm²/s.

The kinematic viscosity of the base oil for lubricant at 40°C can be measured in accordance with JIS K 2283:2000.

In the grease composition of the present invention, the content of the trimellitic acid ester is preferably 50 mass% to 95 mass%, more preferably 60 mass% to 90 mass%, even more preferably 65 mass% to 85 mass%, and particularly preferably 70 mass% to 85 mass%, based on the total amount of the grease composition.

### {Component (B1): phenyl α naphthylamine}

The grease composition of the present invention includes a phenyl **α** naphthylamine as a first antioxidant from the viewpoint of the anti-flaking and oxidation resistance properties. The phenyl **α** naphthylamine is a compound having the structure of the following general formula (II).

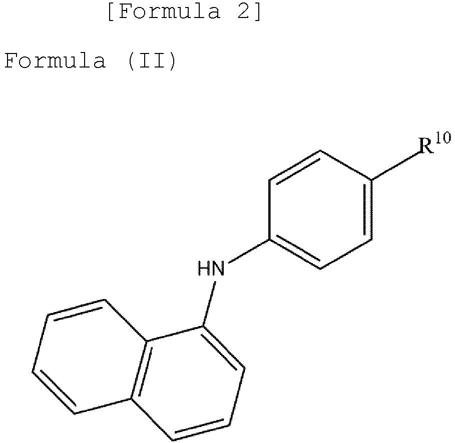

In the formula (II), R¹⁰ represents a hydrogen atom or an alkyl group having 1 to 16 carbon atoms. The alkyl groups represented by R¹⁰ include, for example, a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, etc. (these alkyl groups may be straight-chain or branched.).

In the grease composition of the present invention, a content of the phenyl **α** naphthylamine is preferably 0.1 mass% or more, and more preferably 0.5 mass% or more based on the total amount of the grease composition. In addition, it is preferably 10 mass% or less, and more preferably 5 mass% or less. As a specific range, it is preferably 0.1 mass% to 10 mass%, and more preferably 0.5 mass% to 5 mass%. The content of the phenyl **α** naphthylamine of the above lower limit or more achieves a better oxidation resistance property and the content of the above upper limit or less allows the phenyl **α** naphthylamine to stably maintain a soluble state in the grease.

### {Component (B2): alkyl diphenylamine}

The grease composition of the present invention includes an alkyl diphenylamine as a second antioxidant from the viewpoint of the anti-flaking and oxidation resistance properties. The alkyl diphenylamine is a compound having the structure of the following general formula (III).

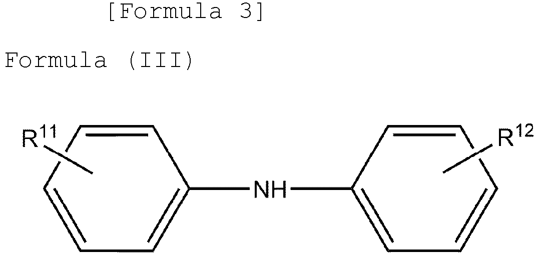

In the formula, R¹¹ and R¹² may be the same or different, and each represents a hydrogen atom or an alkyl group having 1 to 16 carbon atoms. However, R¹¹ and R¹² cannot all be hydrogen atom at the same time. The alkyl groups represented by R¹¹ and R¹² include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, etc. (these alkyl groups may be straight-chain or branched.), but preferably a branched alkyl group having 3 to 16 carbon atoms among them.

In the grease composition of the present invention, a content of the alkyl diphenylamine is preferably 0.1 mass% or more, and more preferably 0.5 mass% or more based on the total amount of the grease composition. In addition, it is preferably 10 mass% or less, and more preferably 5 mass% or less. As a specific range, it is preferably 0.1 mass% to 10 mass%, and more preferably 0.5 mass% to 5 mass%. The content of the alkyl diphenylamine of the above lower limit or more achieves a better oxidation resistance property and the content of the above upper limit or less allows the alkyl diphenylamine to stably maintain a soluble state in the grease.

In the grease composition of the present invention, a mass ratio of the content of the alkyl diphenylamine to the content of the phenyl **α** naphthylamine (alkyl diphenylamine/phenyl **α** naphthylamine) is preferably 0.1 to 10, more preferably 0.3 to 5, and even more preferably 0.5 to 2.

The present inventors have found that a synergistic effect can be obtained by adding the phenyl **α** naphthylamine as the first antioxidant and further adding the alkyl diphenylamine as the second antioxidant. By using these antioxidants together, better oxidation resistance can be achieved while the antioxidants are more stably dissolved in the grease than when only one antioxidant is used. In addition, these antioxidants do not reduce the anti-flaking property. Therefore, the grease composition of the present invention can withstand long-term use.

### (C1) Succinic acid half ester

The grease composition of the present invention includes a succinic acid half ester as a first rust inhibitor from the viewpoint of the anti-flaking and the rust prevention properties. The succinic acid half ester is a compound in which only one of the two carboxylic acid groups of a succinic acid forms an ester bond with an alcohol or the like. Alcohols forming ester bonds include monovalent to trivalent alcohols having 2 to 10 carbon atoms. An alkyl group or alkenyl group or the like may be added to the succinic acid, wherein the number of carbon atoms of the alkyl group or alkenyl group is preferably 1 to 10, and more preferably 2 to 5.

In the grease composition of the present invention, a content of the succinic acid half ester is preferably 0.1 mass% or more, more preferably 0.2 mass% or more based on the total amount of the grease composition. In addition, it is preferably 10 mass% or less, and more preferably 5 mass% or less. As a specific range, it is preferably 0.1 mass% to 10 mass%, and more preferably 0.2 mass% to 5 mass%. The content of the succinic acid half ester of the above lower limit or more achieves a better rust prevention property and the content of the above upper limit or less allows the succinic acid half ester to prevent flowability deterioration at a low temperature.

### (C2) Sorbitan monoester

The grease composition of the present invention includes a sorbitan monoester as a second rust inhibitor from the viewpoint of the anti-flaking and the rust prevention properties. The sorbitan monoester is a compound in which a sorbitan and a fatty acid are bonded to form a monoester. The sorbitan monoesters include sorbitan monooleate, sorbitan monostearate, sorbitan monopalmitate, sorbitan monolaurate, etc.

In the grease composition of the present invention, a content of the sorbitan monoester is preferably 0.1 mass% or more, and more preferably 0.5 mass% or more based on the total amount of the grease composition. In addition, it is preferably 10 mass% or less, and more preferably 5 mass% or less. As a specific range, it is preferably 0.1 mass% to 10 mass%, and more preferably 0.5 mass% to 5 mass%. The content of the sorbitan monoester of the above lower limit or more achieves a better rust prevention property and the content of the above upper limit or less allows the sorbitan monoester to prevent flowability deterioration at a low temperature.

In the grease composition of the present invention, a mass ratio of the content of the sorbitan monoester to the content of the succinic acid half ester (sorbitan monoester/succinic acid half ester) is preferably 0.1 to 10, more preferably 0.3 to 5, and even more preferably 0.5 to 2.

The present inventors have found that a synergistic effect can be obtained by adding the succinic acid half ester as the first rust inhibitor and further adding the sorbitan monoester as the second rust inhibitor. By using these rust inhibitors together, a better rust prevention property can be achieved than when only one rust inhibitor is used. In addition, these rust inhibitors do not reduce the anti-flaking property. Therefore, the grease composition of the present invention can withstand long-term use.

### (D) Urea-based thickener

The grease composition of the present invention includes a urea-based thickener as a thickener. As the urea-based thickener, for example, a diurea compound obtained by the reaction of a diisocyanate with a monoamine, a polyurea compound obtained by the reaction of a diisocyanate with a monoamine or a diamine, a urea/urethane compound obtained by the reaction of a diisocyanate with a primary amine and with a higher alcohol represented by the general formula R1-OH, a diurethane compound obtained by the reaction of a diisocyanate with a higher alcohol, or the like can be used.

The monoamine is a compound having one amino group in one molecule. Among monoamines, primary amines are preferably octylamine, dodecylamine, hexadecylamine, octadecylamine, oleylamine, aniline, p-toluidine, cyclohexylamine, etc. Secondary amines are preferably dicyclohexylamine and the like.

The diamine is a compound having two amino groups in one molecule. The diamines are preferably ethylenediamine, propanediamine, butanediamine, hexanediamine, octanediamine, phenylenediamine, tolylenediamine, xylenediamine, diaminodiphenylmethane, etc. The hydrocarbon groups of monoamines and diamines can be acyclic or cyclic hydrocarbons, and include aromatic hydrocarbons, alicyclic hydrocarbons, chain aliphatic hydrocarbons, etc. The number of carbon atoms is preferably 2 to 20, and more preferably 4 to 18.

The amines used in the urea-based thickener with respect to the present invention are preferably mixed amines of alicyclic amines (hereinafter sometimes referred to as "first amine component") and aromatic amines or chain aliphatic amines or combinations thereof (hereinafter sometimes referred to as "second amine component"). First amine components may be used alone or in combination of two or more. The second amine component may be an aromatic amine alone, a chain aliphatic amine alone, or a mixture of both.

A mixing ratio of the first amine component to the second amine component in the mixed amine is not limited, but a molar ratio of the first amine component to the second amine component (first amine component : second amine component) is preferably 99:1 to 55:45, and more preferably 90:10 to 75:25. In the molar ratio, when the first amine component is a combination of two or more compounds, the molar amount of the first amine component is the molar amount of their total, and when the second amine component is a combination of two or more compounds, the molar amount of the second amine component is the molar amount of their total.

The diisocyanate is a compound in which two hydrogens of a hydrocarbon are replaced by isocyanate groups. The hydrocarbon can be an acyclic or cyclic hydrocarbon and can be any of an aromatic hydrocarbon, an alicyclic hydrocarbon, or an aliphatic hydrocarbon. The number of carbon atoms of the hydrocarbon is preferably 4 to 20, and more preferably 8 to 18. Preferable specific examples of the diisocyanate can include phenylene diisocyanate, tolylene diisocyanate, biphenyl diisocyanate (diphenyl diisocyanate), diphenylmethane diisocyanate, octadecane diisocyanate, decane diisocyanate, hexane diisocyanate, etc. Diisocyanates may be used alone or in combination of two or more.

As the urea-based thickener with respect to the present invention, it is preferable that the diurea compound represented by the following general formula (V) be used.
[Formula 5]

R²⁰NH-CONH-R¹⁰-NHCO-NHR²⁰ (V)

In the general formula (V), R¹⁰ is a divalent hydrocarbon group, which may be an acyclic or cyclic hydrocarbon group, and may be any of an aromatic hydrocarbon group, an alicyclic hydrocarbon group, and an aliphatic hydrocarbon group. The number of carbon atoms of R¹⁰ is preferably 4 to 20, and more preferably 8 to 18. R²⁰ may be the same or different, and is a monovalent alicyclic hydrocarbon group, a monovalent chain aliphatic hydrocarbon group or a monovalent aromatic hydrocarbon group, or a combination thereof. The number of carbon atoms of R²⁰ is preferably 2 to 20, and more preferably 4 to 18. In one molecule, both of the two R²⁰ may be alicyclic hydrocarbon groups, and both of the two R²⁰ may be aromatic hydrocarbon groups or chain aliphatic hydrocarbon groups, or one of the two R²⁰ may be an alicyclic hydrocarbon group and the other may be an aromatic hydrocarbon group or chain aliphatic hydrocarbon group. As all the urea-based thickeners, R²⁰ is a combination of a monovalent alicyclic hydrocarbon group and a monovalent aromatic hydrocarbon group or a chain aliphatic hydrocarbon group, and the combined molar ratio of R²⁰ (alicyclic hydrocarbon group : aromatic hydrocarbon group and/or chain aliphatic hydrocarbon group) in all the urea-based thickeners is preferably 99:1 to 55:45, and particularly preferably 90:10 to 75:25.

A content of the urea-based thickener is not limited as long as desired cone penetration can be obtained, but is for example, preferably 1 mass% or more, more preferably 5 mass% or more, and even more preferably 10 mass% or more based on the total amount of the grease composition. In addition, the content of the urea-based thickener is preferably 40 mass% or less, more preferably 30 mass% or less, and even more preferably 25 mass% or less. As a specific range, it is preferably 1 mass% to 40 mass%, more preferably 5 mass% to 30 mass%, and even more preferably 10 mass% to 25 mass%. Urea-based thickeners may be used alone or in combination of two or more.

In addition to the urea-based thickener, the grease composition may include a thickener other than the urea-based thickener, but its content is preferably 30 mass parts or less, and more preferably 10 mass parts or less, to 100 mass parts of the urea-based thickener.

### (C3) Zinc naphthenate

The grease composition of the present invention may include zinc naphthenate as a rust inhibitor to the extent that the effect of the present invention is not impaired. If a large amount of zinc naphthenate, specifically 2 mass% or more, is included, the anti-flaking property of the grease composition may be impaired. Therefore, the grease composition of the present invention does not include zinc naphthenate, or even if it is included, its content is preferably less than 2 mass%, more preferably 1.0 mass% or less, and even more preferably 0.5 mass% or less.

### (B3) Zinc dialkyl dithiophosphate

The grease composition of the present invention may include a zinc dialkyl dithiophosphate as an antioxidant to the extent that the effect of the present invention is not impaired. As the zinc dialkyl dithiophosphate, a compound having the structure of the following general formula (VI) can be used.

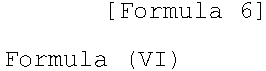

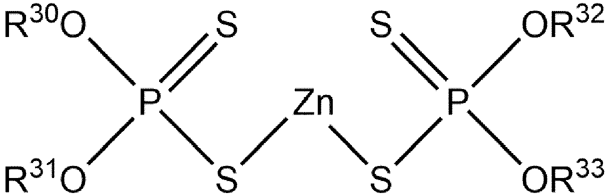

R³⁰ to R³³ in the above general formula (VI) are each independently hydrogen atom or a straight-chain or branched alkyl group having 1-24 carbon atoms, and this alkyl group may be primary, secondary, or tertiary.

If a large amount of zinc dialkyl dithiophosphate, specifically 2 mass% or more, is included, it may impair the anti-flaking property of the grease composition. Therefore, the grease composition of the present invention does not include the zinc dialkyl dithiophosphate, or even if it is included, its content is preferably less than 2 mass%, more preferably 1.0 mass% or less, and even more preferably 0.5 mass% or less.

Furthermore, other additives can be blended into the grease composition of the present invention as needed to impart various properties. For example, additives commonly used in greases, such as extreme pressure agents of organomolybdenum and the like, oiliness improvers of fatty acids and animal or vegetable oil and the like, and metal deactivators of benzotriazole and the like, can be used alone or in a mixture of two or more types. An amount to be added of these additives is not limited as long as they do not impair the effects of the present invention.

The cone penetration of the grease composition of the present invention is preferably 210 to 310, more preferably 215 to 305, even more preferably 220 to 300, and particularly preferably 230 to 295.

The cone penetration herein means the worked penetration measured in accordance with JIS K2220.

Hereinafter, the embodiment of the present invention will be described in detail with reference to the accompanying drawing. Figure 1 is a longitudinal cross-sectional view showing a structure of a ball bearing 1, an embodiment of the rolling device with respect to the present invention.

A ball bearing 1 shown in Figure 1 is composed of an inner ring 10, an outer ring 11, a plurality of balls 13 freely arranged for rolling motion between the inner ring 10 and the outer ring 11, a retainer 12 holding the plurality of balls 13, and a contact-type seal 14 attached to the outer ring 11. The grease composition G is filled in a bearing space enclosed by the inner ring 10, the outer ring 11, and the seal 14, and sealed in the ball bearing 1 by the seal 14. By such grease composition G, contact surfaces of raceway surfaces of both rings 10 and 11 and balls 13 are lubricated.

### Examples

Next, the present invention will be described by way of Examples and Comparable Examples, but the present invention is not limited by the following Examples. Unless otherwise explained, % indicates mass%.

### Examples 1 to 2 and Comparative Examples 1 to 11

### <Blending of Grease>

A grease composition for tests was prepared by blending a thickener, a base oil, an antioxidant, and a rust inhibitor in a blending ratio shown in Table 1 to Table 3 for each Example and each Comparative Example. In Tables, the numerical values for amines of the thickener indicate the molar ratio of the amine that reacts with the diisocyanate compound (methylene diisocyanate), and the other numerical values indicate the blending ratio (%) based on the total amount of the grease composition.

The following evaluations were performed on the grease composition obtained for the tests. The evaluation results are shown in Table 1 to Table 3.

In addition, the kinematic viscosity of the base oil below is the value measured in accordance with JIS K 2283:2000.

### (1) Base oil

· Base oil 1: Trimellitic acid ester (kinematic viscosity: 75 mm²/s (40°C), acid number: 3.2 mgKOH/g)
· Base oil 2: Ether base oil (kinematic viscosity: 100 mm²/s (40**°**C))

### (2) Thickener

· CHA (cyclohexylamine)
· p-t (p-toluidine)
· ODA (octadecylamine)

Amines were dissolved and mixed in a base oil at the molar ratios shown in Table 1 to Table 3, and reacted with the diisocyanate compound (diphenylmethane diisocyanate) dissolved in the base oil, to prepare urea-based compounds.

### (3) Antioxidant and rust inhibitor

Antioxidants and rust inhibitors are added as described in Table 1 to Table 3. Details of the additives are as follows.
· Antioxidant 1: Phenyl **α** naphthylamine
· Antioxidant 2: Alkyl diphenylamine
· Antioxidant 3: Zinc dialkyl dithiophosphate
· Rust inhibitor 1: Succinic acid half ester
· Rust inhibitor 2: Sorbitan monoester
· Rust inhibitor 3: Zinc naphthenate

### <Evaluation>

### (1) Flaking test

Into a deep groove ball bearing with bearing designation of 6301, inner diameter of 12 mm, outer diameter of 37 mm, width of 12 mm, material of SUJ2 was enclosed 1 g of the grease composition for tests, and the ball bearing was rotated at 7,000 min-1 while applying a radial load of 1,225 N at room temperature. The test was stopped when the vibration value exceeded the specified value or when the test time reached 300 hours. After the test, the bearing steel was checked to see whether or not flaking had occurred.

### (2) Rust prevention property

From the test method specified in ASTM D1743, the water in which the bearings are immersed was changed to 0.1 wt % salt water, the test time was changed to 24 hours, and the test temperature was changed to 25°C, to perform the test, and those in which rust occurred were rejected.

### (3) Oxidation stability

Using a PDSC device (DSC Q2000 produced by TA Instruments), 2 mg of the grease was weighed on an aluminum pan, and the time until the endothermic peak occurred was measured under a condition of 3.5 MPa of O₂ and 210°C. Those of which the time until the endothermic peak occurred was 200 minutes or more were accepted.

**[Table 1]**

| | | Example 1 | Example 2 | Comparative Example 1 | Comparative Example 2 | Comparative Example 3 |
|---|---|---|---|---|---|---|
| Base Oil 1 | | Remainder | Remainder | Remainder | Remainder | - |
| Base Oil 2 | | - | - | - | - | Remainder |
| Thickener | CHA | 80 | 80 | 80 | 80 | 80 |
| | p-t | - | 20 | 20 | - | 20 |
| | ODA | 20 | - | - | 20 | - |
| | mass% | 20 | 20 | 20 | 20 | 20 |
| Antioxidant 1 | mass% | 1 | 1 | - | - | - |
| Antioxidant 2 | mass% | 2 | 2 | - | - | - |
| Rust Inhibitor 1 | mass% | 0.5 | 0.5 | - | - | - |
| Rust Inhibitor 2 | mass% | 1 | 1 | - | - | - |
| Worked Penetration (JIS K2220) | | 232 | 257 | 240 | 232 | 200 |
| Flaking Test | 300h | Good | Good | Good | Good | Poor |
| Rust Prevention (Rating) | | Good | Good | Poor | Poor | Poor |
| Oxidation Stability | min | 219 | 219 | 137 | - | - |

**[Table 2]**

| | | Comparative Example 4 | Comparative Example 5 | Comparative Example 6 | Comparative Example 7 | Comparative Example 8 | Comparative Example 9 |
|---|---|---|---|---|---|---|---|
| Base Oil 1 | | Remainder | Remainder | Remainder | Remainder | Remainder | Remainder |
| Thickener | CHA | 80 | 80 | 80 | 80 | 80 | 80 |
| | p-t | 20 | 20 | 20 | 20 | 20 | 20 |
| | mass% | 20 | 20 | 20 | 20 | 20 | 20 |
| Antioxidant 1 | mass% | 2 | - | - | - | - | - |
| Antioxidant 2 | mass% | - | 2 | - | - | - | - |
| Antioxidant 3 | mass% | - | - | - | - | 2 | - |
| Rust Inhibitor 1 | mass% | - | - | 2 | - | - | - |
| Rust Inhibitor 2 | mass% | - | - | - | 2 | - | - |
| Rust Inhibitor 3 | mass% | - | - | - | - | - | 2 |
| Flaking Test | 300h | Good | Good | Good | Good | Poor | Poor |

**[Table 3]**

| | | Comparative Example 10 | Comparative Example 11 |
|---|---|---|---|
| Base Oil 1 | | 100 | 100 |
| Thickener | CHA | 80 | 80 |
| | p-t | 20 | 20 |
| | mass% | 20 | 20 |
| Antioxidant 1 | mass% | 1 | |
| Antioxidant 2 | mass% | | 2 |
| Rust Inhibitor 1 | mass% | 0.5 | 0.5 |
| Rust Inhibitor 2 | mass% | 1 | 1 |
| Worked Penetration (JIS K2220) | | 255 | 260 |
| Oxidation Stability | min | 133 | 175 |

In the grease compositions of Examples 1 to 2, no flaking was observed in the bearing steel, and the rust prevention and the oxidation stability were also good.

The anti-flaking property of Comparative Examples 1 and 2 using the trimellitic acid ester was good, but flaking was observed in Comparative Example 3 using the ether base oil. Therefore, the trimellitic acid ester was considered to be effective in improving the anti-flaking property. However, since no rust inhibitor was included in Comparative Examples 1 to 3, the rust prevention deteriorated in all cases.

In Comparative Examples 4 to 7, where Antioxidant 1, Antioxidant 2, Rust inhibitor 1, or Rust inhibitor 2 was respectively added to the trimellitic acid ester, no flaking was observed in the bearing steel. Therefore, these additives were considered to have no adverse effect on the anti-flaking property.

On the other hand, in Comparative Examples 8 and 9, where Antioxidant 3 or Rust inhibitor 3 was added to the trimellitic acid ester, flaking was observed in the bearing steel. Therefore, these additives were considered to have an adverse effect on the anti-flaking property.

In Comparative Example 10 where Antioxidant 1 was included in the trimellitic acid ester but Antioxidant 2 was not, and in Comparative Example 11 where Antioxidant 2 was included in the trimellitic acid ester but Antioxidant 1 was not, the oxidation stability of the grease itself deteriorated compared with Examples 1 and 2.

### Industrial Applicability

The grease composition of the present invention is excellent in the anti-flaking, the rust prevention, and the oxidation resistance properties, and furthermore, the fatigue life of the rolling device and the like in which the grease is enclosed can be maintained for a long time. Therefore, the grease composition of the present invention can withstand long-term use. By way of its properties, it can be used, for example, as a grease composition for rolling bearings of pulleys in belt-driven parts of electrical components/auxiliaries and the like.

### Reference Signs List

- 1: Ball bearing
- 10: Inner ring
- 11: Outer ring
- 12: Retainer
- 13: Balls
- 14: Contact type seal

## Claims

1. A grease composition comprising:
(A) a trimellitic acid ester,
(B1) a phenyl **α** naphthylamine,
(B2) an alkyl diphenylamine,
(C1) a succinic acid half ester,
(C2) a sorbitan monoester, and
(D) a urea-based thickener.

2. The grease composition according to claim 1, wherein the grease composition comprises no or less than 2 mass% of (C3) zinc naphthenate.

3. The grease composition according to claim 1 or 2, wherein the grease composition comprises no or less than 2 mass% of (B3) a zinc dialkyl dithiophosphate.

4. The grease composition according to claim 1 or 2, wherein the grease composition comprises:
50 mass% to 95 mass% of (A) the trimellitic acid ester based on the total amount of the grease composition,
0.1 mass% to 10 mass% of (B1) the phenyl **α** naphthylamine based on the total amount of the grease composition,
0.1 mass% to 10 mass% of (B2) the alkyl diphenylamine based on the total amount of the grease composition,
0.1 mass% to 10 mass% of (C1) the succinic acid half ester based on the total amount of the grease composition,
0.1 mass% to 10 mass% of (C2) the sorbitan monoester based on the total amount of the grease composition, and 5 mass% to 30 mass% of (D) the urea-based thickener based on the total amount of the grease composition.

5. The grease composition according to claim 3, wherein the grease composition comprises:
50 mass% to 95 mass% of (A) the trimellitic acid ester based on the total amount of the grease composition,
0.1 mass% to 10 mass% of (B1) the phenyl **α** naphthylamine based on the total amount of the grease composition,
0.1 mass% to 10 mass% of (B2) the alkyl diphenylamine based on the total amount of the grease composition,
0.1 mass% to 10 mass% of (C1) the succinic acid half ester based on the total amount of the grease composition,
0.1 mass% to 10 mass% of (C2) the sorbitan monoester based on the total amount of the grease composition, and 5 mass% to 30 mass% of (D) the urea-based thickener based on the total amount of the grease composition.

6. A bearing and a rolling device, wherein the grease according to claim 1 or 2 is enclosed therein as lubricant.

7. A bearing and a rolling device, wherein the grease according to claim 3 is enclosed therein as lubricant.

8. A bearing and a rolling device, wherein the grease according to claim 4 is enclosed therein as lubricant.

9. A bearing and a rolling device, wherein the grease according to claim 5 is enclosed therein as lubricant.
